# EUROPEAN PATENT SPECIFICATION

(11) **EP 4 067 216 B1**
(45) Date of publication and mention of the grant of the patent: **08.01.2025**
(21) Application number: 22162023.0
(22) Date of filing: 15.03.2022
(51) Int. Cl.: B62H 5/00, B62J 43/16, B62J 43/23

(54) **A POWER UNIT LOCKING APPARATUS IN A SADDLE TYPE VEHICLE**
ANTRIEBSEINHEITSVERRIEGELUNGSVORRICHTUNG FÜR EIN SATTELFAHRZEUG
APPAREIL DE VERROUILLAGE D'UNITÉ DE PUISSANCE DANS UN VÉHICULE DE TYPE À ENFOURCHER

(30) Priority: 29.03.2021 IN 202141013973
(43) Date of publication of application: 05.10.2022
(73) Proprietor: TVS Motor Company Limited, 600006 Chennai (IN)
(72) Inventor: Sridhar, Balaguru, 600 006 Chennai (IN); Nareshkumar, Dayanandam, 600 006 Chennai (IN); Vishwanath Patil, Lohit, 600 006 Chennai (IN)
(74) Representative: Patentanwaltskanzlei Matschnig & Forsthuber OG

(56) References cited:
- WO-A1-2015/092818

## Description

### TECHNICAL FIELD

The present subject matter generally relates to a saddle type vehicle. The present subject matter specifically but not exclusively relates to a power unit locking apparatus in a saddle type vehicle.

### BACKGROUND

In recent times there is an increased demand to control emissions from automobiles, in view of adverse environmental impact. As a result, use of alternative fuels has been given enough consideration to replace or to reduce the emissions. Due to environmental issues, the development and widespread usage of a zero emission vehicle e.g. electric vehicles is slowly becoming a norm in day to day life.

The electric vehicle relies on power source like a battery which can be a lithium ion, lead acid or a fuel cell. Since, the vehicle needs to operate over longer period, more efficient batteries are required which can drive the vehicle for minimum of 4- 6 hours. After which the battery is either replaced with a new fully charged battery or the vehicle has to be taken to a charging station.

### BRIEF DESCRIPTION OF THE DRAWINGS

The detailed description is described with reference to an embodiment of a saddle type vehicle along with the accompanying figures. The same numbers are used throughout the drawings to reference like features and components.
**Fig. 1** illustrates a left side view of an exemplary two-wheeled vehicle, in accordance with an embodiment of the present subject matter.
**Fig. 2** illustrates a perspective view of the vehicle, in accordance with an embodiment of the present subject matter.
**Fig. 3** illustrates a perspective view of the vehicle, in accordance with an embodiment of the present subject matter.
**Fig. 4** illustrates a side view of the vehicle, in accordance with an embodiment of the present subject matter.
**Fig. 5** illustrates a rear side view of the vehicle, in accordance with an embodiment of the present subject matter.
**Fig. 6** illustrates a rear side view of the vehicle, in accordance with an embodiment of the present subject matter.
**Fig. 7** illustrates a power unit locking apparatus, in accordance with an embodiment of the present subject matter.
**Fig. 8** illustrates a power unit holder, in accordance with an embodiment of the present subject matter.
**Fig. 9** illustrates a power unit and the power unit in a loaded condition within the power unit holder, in accordance with an embodiment of the present subject matter.
**Fig. 10** illustrates a loading /unloading position of the power unit into the power unit holder, in accordance with an embodiment of the present subject matter.

### DETAILED DESCRIPTION

Electric vehicle powered by a removable battery pack eliminates the necessity of taking the vehicle itself to a charging point, which is not feasible in case the charging point is not accessible e.g. if the charging point is located in a residential building with no infrastructure to transport the vehicle from one point to another point. Hence, a removable battery pack eliminates the requirement of moving the vehicle during charging of the battery. Also with limitation of maximum distance that can be travelled in single charge, it is typically not feasible for the user to wait for long duration at a charging station to recharge the batteries before continuing on the journey. Thus a swapping system has emerged as one of a feasible option.

One of the known art discloses a battery module for vehicle which comprises a tray configuration for holding one or more vehicle traction batteries. The module also includes a positive conductor and a negative conductor which are connected to the traction batteries and both the conductors are movable with the tray. Further, a door is provided in the vehicle which is hingedly attached to the body of the vehicle and it can be closed to prevent any environmental exposure or any longitudinal motion of the tray. The secure and safe locking of the battery unit in a four wheeled vehicle is less complex as compared to that of a two and three wheeled vehicle. Such vehicles being primarily with open architecture, are vulnerable to theft and tampering of the battery unit which is undesirable. There is a conflicting requirement of the swapping system being easy to access, remove the batteries as against having the battery unit is a secure and not so easily accessible configuration to avoid theft and tampering.

Document WO2015/092818, which discloses all the features of the preamble of independent claim 1, shows a two-wheeled vehicle known in the art.

With the provision of removable tray, it becomes necessary that the access to the battery packs is restricted and prevent the theft of the battery which may leave the person stranded. The battery needs to be locked in a surreptitious manner so that any attempt to steal and tampering is defeated. Thus there is a need for an improved layout configuration of a two and three wheeled vehicle so as to enable safe, secure packaging of the battery unit while still enabling ease of access for service, charging etc.

The present subject matter provides a power unit with an improved locking apparatus in a saddle type vehicle. The power unit locking apparatus as per present invention locks the power unit to a utility box of the vehicle which is accessible only when the seat assembly of the vehicle is an unlocked state. This enables the power unit to be inaccessible from outside and eliminating the probability of tempering of lock which are generally located on the door of the tray, which holds the power unit.

Another embodiment of the present subject matter discloses a cover front having a cut-out to dispose a power unit inside a cavity formed between the seat assembly and a utility box. The cover front is configured to receive a grill cover which is hingedly mounted on the cover front.

Yet another embodiment of the present subject matter discloses a power unit holder configured with one or more grooves. The grooves are capable of accepting rolling means. The rolling means are needle type rollers which helps in easy loading and unloading of the power unit.

Still another embodiment of the present subject matter discloses a latching means provided on the power unit which enables coupling with the power unit locking apparatus. The latching means are either a detachable unit or an integrated unit. Also, the latching means are hollow structure.

Another embodiment of the present subject matter discloses a power unit locking apparatus which has a head portion, a primary male coupler and a secondary male coupler (). The present subject matter is further described with reference to the accompanying figures. It should be noted that the description and figures merely illustrate the principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

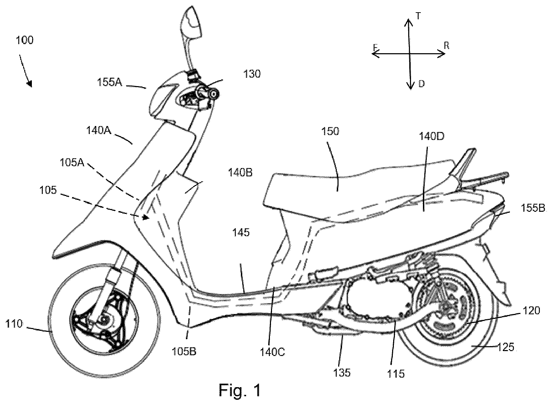

**Fig. 1** illustrates a left side view of an exemplary two-wheeled vehicle (100), in accordance with an embodiment of the present subject matter. The vehicle (100) illustrated, has a schematically shown frame assembly (105) (shown in dotted line). In the present embodiment, the frame assembly (105) is step-through type that includes a head tube (105A), and a main frame (105B) extending rearwardly downward from an anterior portion of the head tube (105A). The main frame (105B) extends inclinedly rearward to a rear portion of the vehicle (100).

The vehicle (100) includes a prime movers that is connected to the frame assembly (105). In one embodiment, a structural member (135) is a rigid member made of metal. In a preferred embodiment, the electric motor (120) is hub mounted to one wheel of the vehicle (100). In another embodiment, more than one electric motor is mounted to wheels of the vehicle. In the depicted embodiment, the vehicle (100) includes at least two-wheels and the electric motor (120) is hub mounted to the rear wheel (125) of the vehicle. A front wheel (110) is rotatably supported by the frame assembly (105) and is connected to a handle bar assembly (130) that enables manoeuvring of the vehicle (100). The handle bar assembly (130) may provide support to a master cylinder assembly (not show), which is used in the braking system of the vehicle (100). The master cylinder assembly, further, has provision to support a mobile device holder without affecting the function of the master cylinder assembly. The support for the mobile device can be a holder, which can be positioned on either side of the speedometer without affecting the speedometer visibility.

Further, the vehicle (100) includes a high capacity on-board battery (not shown) that drives the electric motor (120). The high capacity battery may include one or more high capacity battery packs or one or more low capacity cells. The high capacity battery can be disposed at a front portion, a rear portion, or at the centre of the vehicle (100). The high capacity battery is supported by the frame assembly (105) and the vehicle (100) includes plurality of body panels, mounted to the frame assembly (105) for covering various components of the vehicle (100). The plurality of panels includes a front panel (140A), a leg shield (140B), an under-seat cover (140C), and a left and a right side panel (140D). A glove box may be mounted to a leg shield (140B).

A floorboard (145) is provided at the step-through portion defined by the main frame (105B). A seat assembly (150) is disposed rearward to the step-through portion and is mounted to the main frame (105B). The seat assembly (150) that is elongated in a longitudinal direction F-R of the vehicle (100) enables the user to operate the vehicle in a saddle ride-type posture. One or more suspension(s) connect the wheels (110), (125) to the vehicle (100) and provides comfortable ride. The vehicle (100) comprises of plurality of electrical and electronic components including a headlight (155A) movably supported on a head tube (105A), a taillight (155B), a starter motor (not shown), a horn etc. A housing of the headlight (155A) and housing of the instrument cluster can be plastic welded for seamless finish. Also, the vehicle (100) includes a master control unit (not shown) that takes control of the overall operation of the vehicle (100) including the function of the electric motor (120), charging of the batteries, charging of the high capacity batteries by the electric motor operating in generator mode, and any other operations associated with the operation of the vehicle (100).

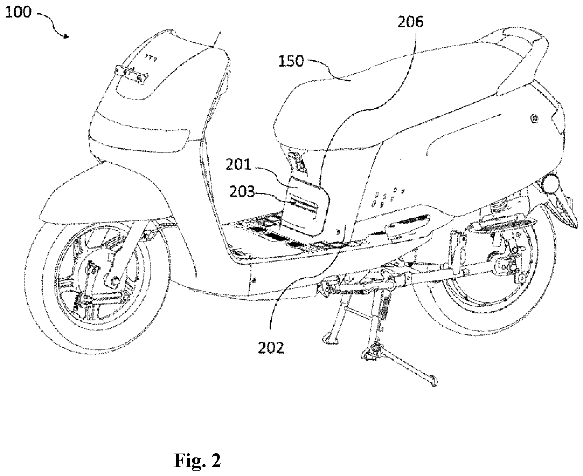

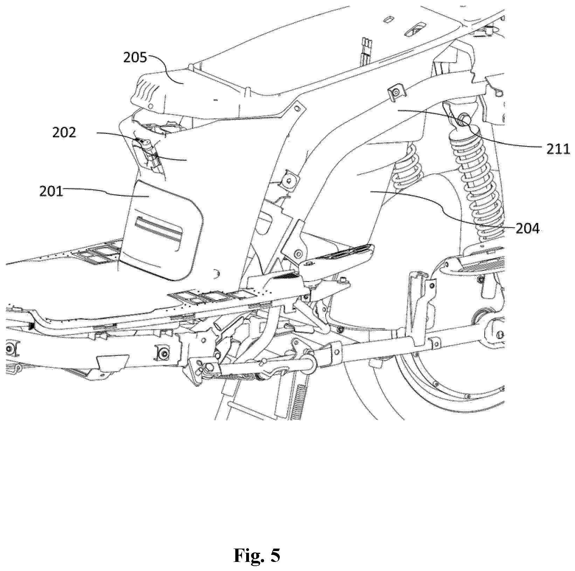

**Fig. 2** illustrates a perspective front left side view of the vehicle (100) with few parts omitted for clarity. The rear portion of the vehicle (100) located below the seat assembly (150) and above the floor board (145) is protected by a cover front (202). The cover front (202) is provided with a cut-out (206). A power unit (201) such as a battery pack is disposed below the seat assembly (150) and downwards of the utility box (204) (refer fig. 5) assembled through the cut-out opening (206) provided in the cover front (202).

The power unit (203) is provided with a grab handle (203) to enable easy removal and assembly of the power unit (201) through the cut-out (206) provided in the cover front (202). The body of the power unit (201) is moulded in a way to complement the shape of the cover front (202).

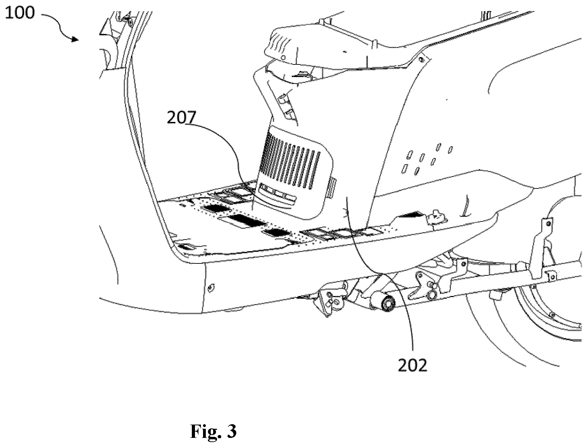

**Fig. 3** illustrates a perspective view of the vehicle (100) as per another embodiment and is configured with a grill cover (207). The grill cover (207) covers the power unit (201) from any external impact or direct contact with the user's body. The grill cover (207) is hingedly mounted on the cover front (202). As per an alternate embodiment, the power unit (201) itself may be configured with an integral to function as a grill cover thereby eliminating a separate grill cover (207).

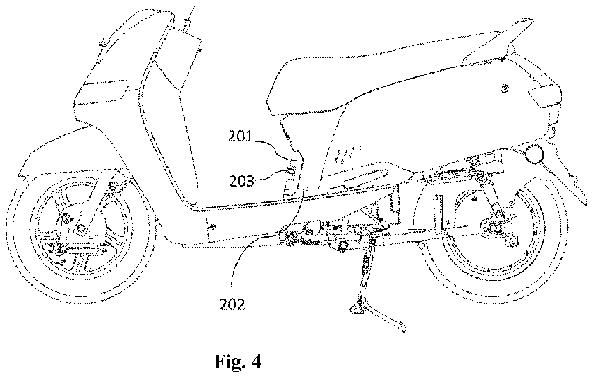

**Fig. 4** illustrates a side view of the vehicle (100) with the power unit (201) installed below the seat assembly (150) and on the front side of the seat assembly (150).

**Fig. 5** illustrates a front side perspective view of the vehicle (100) with few parts omitted for clarity. The utility box (204) is disposed on a pair of side rail (211), which forms a part of the frame structure of the vehicle (100). The utility box (204) comprises a front support structure (205) which provides support to the seat assembly (150).

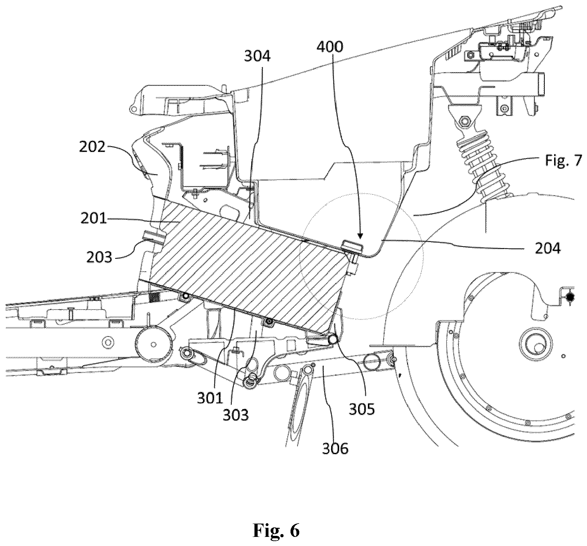

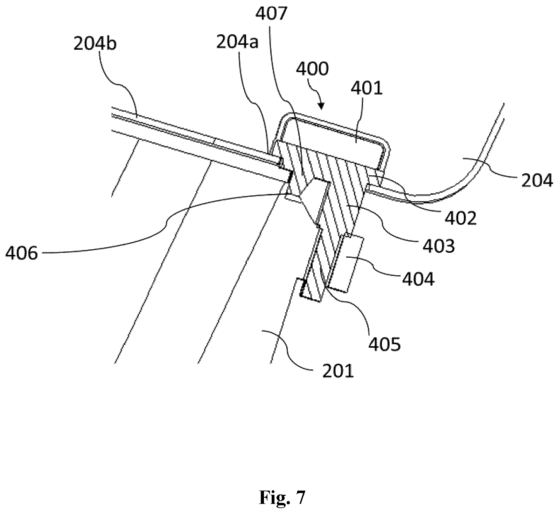

**Fig. 6** illustrates a rear side view of the vehicle (100) depicting a power unit locking apparatus (400). The power unit (201) is disposed below the utility box (204) and the utility box (204) is disposed below the seat assembly (150) (not shown). As per one embodiment, a bottom surface (204b) (refer fig. 7) of the utility box (204) is inclined with respect to the ground, in order to accommodate the vehicle components. In another embodiment the bottom surface (204b) of the utility box (204) is parallel to the ground. The power unit (201) is disposed through the cut -out (206) provided on the cover front (202) into a cavity (304) formed below the seat assembly (150) in proximity of the utility box (204). A power unit holder (301) disposed inside the cavity (304) enables the power unit (201) to be slid into the cavity (304). The power unit holder (301) is adaptively disposed inside the cavity (304) by mounting the power unit holder (301) on to a rear frame structure (303). The power unit holder (301) gets additional support form an angled bracket (305). The angled bracket (305) is pivotally mounted on a frame structure and disposed above the swing arm (306) so as to have adequate working clearance for the swing-arm (306) and being disposed in front of the rear wheel well. The power unit (201) is locked to the utility box (201) by a power unit locking apparatus (400).

**Fig. 7** illustrates the magnified view of the power unit locking apparatus (400) to enable the locking of the power unit (201) to the utility box (201). The bottom surface (204b) of the utility box (204) is perforated or configured with an opening to form an access means (204a) for inserting the power unit locking apparatus (400) to pass through the bottom surface (204b) of the utility box (201) and couple with a latching means (404) provided on the power unit (201). In one embodiment the latching means forms a part of the body of the power unit (201), therefore, is an integrated unit and in another embodiment, the latching means (404) is separate unit which is capable of getting detachably configured to the power unit (201), therefore it is a detachable unit.

As per an embodiment, the latching means (404) is a hollow structure and capable of receiving a primary male coupler (403) of the power unit locking apparatus (400). The power unit locking apparatus (400) comprises a head portion (401) which can be lifted to unlock the power unit (201) or it can be pressed with a force to lock the power unit (201) with the utility box (204). Further, the latching means (404) comprises a secondary male coupler (407) which gets coupled to a female coupler (406) provided in the power unit (201). The power unit locking apparatus (400) restricts any lateral motion of the power unit (201) and restricts the location of the power unit (201) at a desired place in a secure and stable manner. Therefore, the power unit locking apparatus (400) allows locking of the power unit (201) and also eliminates vibration of the power unit (201), which may be caused when the vehicle is in motion.

The power unit locking apparatus (400) is at least partially disposed within the utility box (204) in such a manner that in order to gain access to the power unit (201), first, the seat assembly (150) need to be unlocked. As long as the seat assembly (150) remains locked, the power unit (201) cannot be taken out from the power unit holder (301). This way the present invention ensures that the power unit (201) remains inaccessible from outside and continues to be securely held in a locked condition. In another embodiment, the power unit locking apparatus (400) is a power coupler for the power unit (201) and the power coupler can be a dockable connector or a manual connector enabling the power unit to function only in a condition of being assembled a vehicle and rendering it non-functional when dismantled from the vehicle or the coupler.

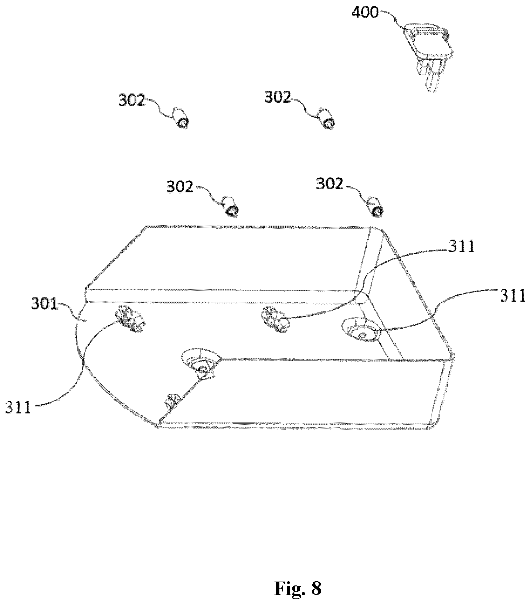

**Fig. 8** illustrates the power unit holder (301), which enables the power unit (201) to be slide into the cavity (304). The power unit holder (301) is enclosed from three vertical sides and open from the fourth side which faces towards the front vertical side of the vehicle (100) and enables the power unit (201) to be loaded or removed from the front side. As per the present embodiment, the power unit holder (301) is also open from the top side where the power unit (201) comes into abutment contact with the bottom surface (204b) of the utility box (204) to enable a rigid holding of the power unit in a desired condition. When the power unit (201) loading and unloading is done, the friction between the surfaces coming in contact viz. power unit (201) and the power unit holder (301), causes some resistance. To eliminate the problem of resistance while loading and unloading of the power unit (201) into the power unit holder (301), rolling means (302) are provided within the grooves (311) formed on the surface of the power unit holder (301). The rolling means (302) starts rotating when the loading or unloading of the power unit (201) is done. The rolling means (302) assists in the process of loading and unloading of the power unit (201) within the power unit holder (301) by eliminating the resistance created between the surfaces of the power unit (201) and the power unit holder (301). Since, the provision of rolling means (302) can cause undesirable vibration motion of the power unit (201) when the vehicle (100) is in moving condition; the power unit locking apparatus (400) helps in keeping the power unit (201) rigidly secured at one place and restricts any undesirable vibratory or oscillatory movement of the power unit. As per an embodiment, the rolling means (302) is a needle type roller.

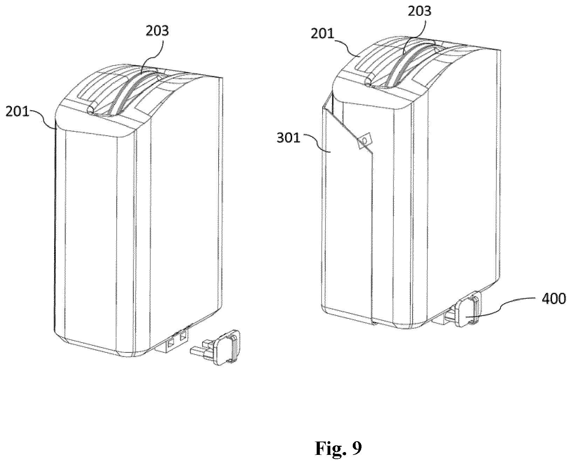

**Fig. 9** illustrates a power unit (201) and the power unit (201) in a loaded condition within the power unit holder (301). The power unit locking apparatus (400) keeps the power unit (201) stationary within the power unit holder (301).

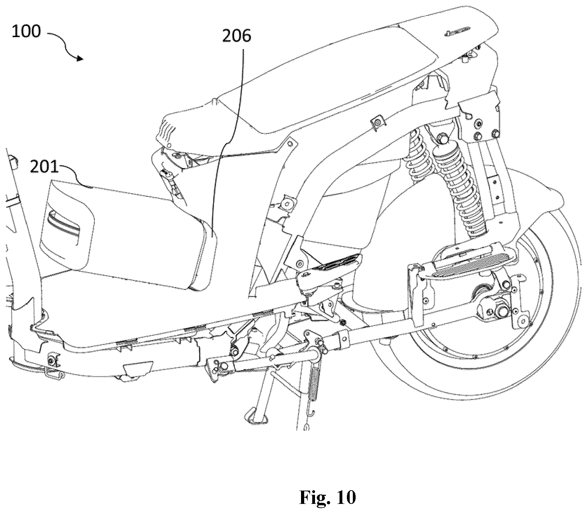

**Fig. 10** illustrates a loading /unloading position of the power unit (201) into the power unit holder (301) when the power unit is just about being slid into the holder (301) or being taken out of the secure and stable holder (301).

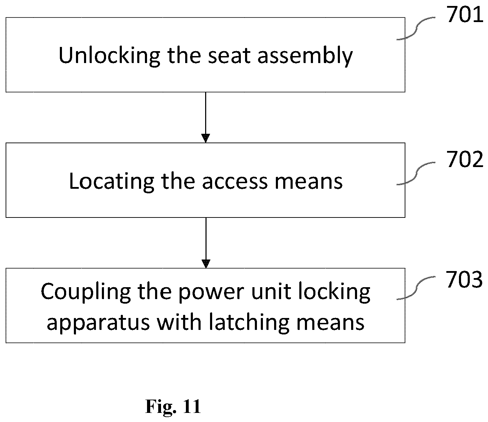

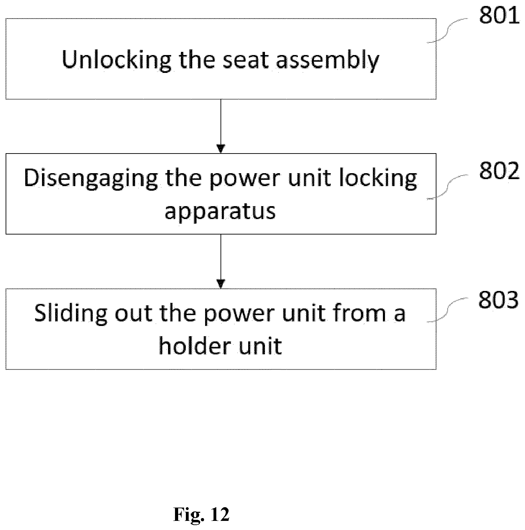

**Fig. 11** illustrates a flow chart to engage the power unit locking apparatus (400) in the vehicle (100). In step 701, the seat assembly (150) of the vehicle (100) is unlocked by an authorised access of the seat lock system (not shown) followed by sliding the power unit (201) into the holder unit (301). In step 702, the power unit locking apparatus (400) is located in the access means (204a) of the utility box (204) by passing the locking apparatus (400) through the bottom surface (204b) of the utility box (201). Then in step 703, the power unit locking apparatus (400) is coupled with a latching means (404) provided on the power unit (201). As per an aspect of the present invention, the steps are performed in reverse manner for disengaging the power unit (201), refer fig. 12. In step 801, the seat assembly (150) is unlocked. In step 802, the power unit locking apparatus (400) is first disengaged after opening up the utility box (204) followed by sliding out of the power unit (201) from the holder unit (301) in step 803.

### LIST OF REFERENCE SIGNS

vehicle (100)
frame assembly (105)
head tube (105A)
main frame (105B)
structural member (135)
electric motor (120)
rear wheel (125)
front wheel (110)
handle bar assembly (130)
front panel (140A)
under-seat cover (140C)
a left and a right side panel (140D)
a leg shield (140B)
floorboard (145)
headlight (155A)
electric motor (120)
seat assembly (150)
cover front (202)
cut-out (206)
power unit (201)
utility box (204)
grab handle (203)
grill cover (207)
front support structure (205)
power unit locking apparatus (400)
bottom surface (204b)
power unit holder (301)
rear mounting suspension structure (303)
swing arm (306)
latching means (404)
primary male coupler (403)
secondary male coupler (407)
head portion (401)
rolling means(302)

## Claims

1. A two-wheeled vehicle, wherein said two-wheeled vehicle comprising :
a rear portion,
said rear portion comprising a seat assembly (150);
a utility box (204) disposed below said seat assembly (150) and behind a cover front (202); and
a power unit (201) disposed below said utility box (204),
said power unit (201) locked to said utility box (204) with a power unit locking apparatus (400), **characterised in that** a bottom surface (204b) of said utility box (201) forms an access means (204a) for inserting said power unit locking apparatus (400).

2. The two-wheeled vehicle as claimed in claim 1, wherein said power unit (201 ) being disposed within a cavity (304) through said cover front (202);
wherein, said cover front (202) comprises a cut-out (206) to dispose said power unit (202) inside said cavity (304);
wherein, said cavity (304) formed between said seat assembly (150) and said utility box (204); and
said cover front (202) being configured to receive a grill cover (207) ;
wherein, said grill cover being hingedly mounted on said cover front (202).

3. The two-wheeled vehicle as claimed in claim 1, wherein said power unit (202) being disposed in a power unit holder (301);
wherein, said power unit holder (301) being configured with one or more grooves (311);
wherein, said grooves (311) being configured to accept rolling means (302);
wherein, said rolling means (302) being needle type rollers.

4. The two-wheeled vehicle as claimed in claim 3, wherein said power unit holder (301) being disposed inside a cavity (304).

5. The two-wheeled vehicle as claimed in claim 1, wherein said power unit holder (301) being mounted on to a rear mounting suspension structure (303) and supported by an angled bracket (305);
wherein, said angled bracket (305) being pivotally mounted on a frame structure and said angled bracket being disposed above a swing arm (306).

6. The two-wheeled vehicle as claimed in claim 1, wherein said power unit (201) being configured with a latching means (404)(201) to couple with said power unit locking apparatus(400);
wherein, said latching means (404) being one of a detachable unit and an integrated unit; and said latching means (404) being a hollow structure.

7. The two-wheeled vehicle as claimed in claim 1, wherein said power unit locking apparatus(400) comprises a head portion (401); a primary male coupler (403); a secondary male coupler (407);
wherein, said primary male coupler (403) being received in said latching means (404) and said secondary male coupler (407) being coupled to a female coupler (406) provided in said power unit (201).

8. The two-wheeled vehicle as claimed in claim 1, wherein said power unit locking apparatus (400) being configured to function as a power coupler;
wherein, said power unit locking apparatus (400) being one of a dockable electrical connector and a manual electrical connector.

9. The two-wheeled vehicle as claimed in claim 1, wherein said power unit (201) is configured with an integral grill cover (207).

10. A method to engage a power unit (201) in a two-wheeled vehicle (100), said method comprising steps of:
unlocking a seat assembly (150) of said vehicle (100) through authorised access means;
locating a power unit locking apparatus (400) in an access means (204a) in an utility box (201); and
coupling said power unit locking apparatus (400) with a latching means (404) provided on a power unit (201), wherein a bottom surface (204b) of said utility box (201) forms said access means (204a) for inserting said power unit locking apparatus (400).

11. A method to disengage a power unit (201) in a two-wheeled vehicle (100) comprising the steps of:
unlocking a seat assembly (150) of said two-wheeled vehicle (100) through authorised access means;
disengaging a power unit locking apparatus (400) inserted in an access means (204a) formed in a bottom surface (204b) of a utility box; and
sliding out the power unit (201) from a holder unit (301).

## Patentansprüche

1. Zweirädriges Fahrzeug, wobei das zweirädrige Fahrzeug umfasst:
einen hinteren Teil,
wobei der hintere Teil eine Sitzanordnung (150) umfasst;
einen Nutzkasten (204), der unter der Sitzanordnung (150) und hinter einer Abdeckfront (202) angeordnet ist; und
eine Antriebseinheit (201), die unter dem Nutzfahrzeugkasten (204) angeordnet ist, wobei die Antriebseinheit (201) mit einer Antriebseinheit-Verriegelungsvorrichtung (400) an dem Nutzkasten (204) verriegelt ist,
**dadurch gekennzeichnet, dass**
eine Bodenfläche (204b) des Nutzkastens (201) ein Zugangsmittel (204a) zum Einführen der Antriebseinheit-Verriegelungsvorrichtung (400) bildet.

2. Zweirädriges Fahrzeug nach Anspruch 1, wobei die Antriebseinheit (201) in einem Hohlraum (304) durch die Abdeckungsfront (202) angeordnet ist;
wobei die Abdeckungsfront (202) einen Ausschnitt (206) aufweist, um die Antriebseinheit (202) innerhalb des Hohlraums (304) anzuordnen;
wobei der Hohlraum (304) zwischen der Sitzbaugruppe (150) und der Versorgungsbox (204) ausgebildet ist; und
die Abdeckungsvorderseite (202) zur Aufnahme einer Grillabdeckung (207) konfiguriert ist;
wobei die Grillabdeckung schwenkbar an der Abdeckungsfront (202) angebracht ist.

3. Zweirädriges Fahrzeug nach Anspruch 1, wobei die Antriebseinheit (202) in einem Antriebseinheitenhalter (301) angeordnet ist;
wobei der Triebwerkshalter (301) mit einer oder mehreren Nuten (311) versehen ist;
wobei die Nuten (311) so gestaltet sind, dass sie Rollmittel (302) aufnehmen;
wobei die Rollmittel (302) nadelartige Rollen sind.

4. Zweirädriges Fahrzeug nach Anspruch 3, wobei der Triebwerkshalter (301) innerhalb eines Hohlraums (304) angeordnet ist.

5. Zweirädriges Fahrzeug nach Anspruch 1, wobei der Triebwerkshalter (301) an einer hinteren Aufhängungsstruktur (303) montiert ist und von einer abgewinkelten Halterung (305) getragen wird;
wobei die abgewinkelte Halterung (305) schwenkbar an einer Rahmenstruktur angebracht ist und die abgewinkelte Halterung oberhalb eines Schwingarms (306) angeordnet ist.

6. Zweirädriges Fahrzeug nach Anspruch 1, wobei die Antriebseinheit (201) mit einem Verriegelungsmittel (404) (201) konfiguriert ist, um mit der Verriegelungsvorrichtung (400) der Antriebseinheit zu koppeln;
wobei die Verriegelungseinrichtung (404) entweder eine abnehmbare Einheit oder eine integrierte Einheit ist; und die Verriegelungseinrichtung (404) eine hohle Struktur ist.

7. Zweirädriges Fahrzeug nach Anspruch 1, wobei die Verriegelungsvorrichtung (400) der Antriebseinheit einen Kopfteil (401), eine primäre Steckerkupplung (403) und eine sekundäre Steckerkupplung (407) umfasst;
wobei die primäre Steckerkupplung (403) in der Verriegelungseinrichtung (404) aufgenommen ist und die sekundäre Steckerkupplung (407) mit einer in der Antriebseinheit (201) vorgesehenen Buchsenkupplung (406) gekoppelt ist.

8. Zweirädriges Fahrzeug nach Anspruch 1, wobei die Triebwerkseinheit-Verriegelungsvorrichtung (400) so konfiguriert ist, dass sie als Leistungskupplung funktioniert;
wobei die Triebwerkseinheit-Verriegelungsvorrichtung (400) entweder ein andockbarer elektrischer Verbinder oder ein manueller elektrischer Verbinder ist.

9. Zweirädriges Fahrzeug nach Anspruch 1, wobei die Antriebseinheit (201) mit einer integrierten Grillabdeckung (207) konfiguriert ist.

10. Verfahren zum Einsetzen einer Antriebseinheit (201) in ein zweirädriges Fahrzeug (100), wobei das Verfahren die folgenden Schritte umfasst::
Entriegeln einer Sitzbaugruppe (150) des Fahrzeugs (100) durch autorisierte Zugangsmittel;
Anordnen einer Verriegelungsvorrichtung (400) für die Antriebseinheit in einem Zugangsmittel (204a) in einer Versorgungsbox (201); und
Koppeln der Triebwerkseinheit-Verriegelungsvorrichtung (400) mit einer Verriegelungseinrichtung (404), die an einer Triebwerkseinheit (201) vorgesehen ist, wobei eine Bodenfläche (204b) der Versorgungsbox (201) die Zugangseinrichtung (204a) zum Einsetzen der Triebwerkseinheit-Verriegelungsvorrichtung (400) bildet.

11. Verfahren zum Entriegeln einer Antriebseinheit (201) in einem zweirädrigen Fahrzeug (100), das die folgenden Schritte umfasst:
Entriegeln einer Sitzbaugruppe (150) des Zweiradfahrzeugs (100) durch autorisierte Zugangsmittel;
Lösen einer Verriegelungsvorrichtung (400) für die Antriebseinheit, die in ein Zugangsmittel (204a) eingesetzt ist, das in einer Bodenfläche (204b) einer Versorgungsbox ausgebildet ist; und
Herausschieben der Antriebseinheit (201) aus einer Halterungseinheit (301).

## Revendications

1. Véhicule à deux roues, dans lequel ledit véhicule à deux roues comprend :
une partie arrière,
Cette partie arrière comprend un siège (150) ;
un coffre utilitaire (204) disposé sous ledit siège (150) et derrière un couvercle avant (202) ; et
une unité de puissance (201) disposée sous ladite boîte utilitaire (204),
ladite unité de puissance (201) est verrouillée à ladite boîte utilitaire (204) par un dispositif de verrouillage de l'unité de puissance (400), **caractérisé en ce qu'**une surface inférieure (204b) de ladite boîte utilitaire (201) forme un moyen d'accès (204a) permettant d'insérer ledit dispositif de verrouillage de l'unité de puissance (400).

2. Véhicule à deux roues selon la revendication 1, dans lequel ladite unité de puissance (201 ) est disposée à l'intérieur d'une cavité (304) à travers ledit couvercle avant (202) ;
dans lequel, ledit couvercle avant (202) comprend une découpe (206) pour disposer ladite unité de puissance (202) à l'intérieur de ladite cavité (304) ;
dans laquelle ladite cavité (304) est formée entre ledit ensemble de siège (150) et ladite boîte de service (204) ; et
ladite partie avant du couvercle (202) est configurée pour recevoir un couvercle de gril (207) ;
dans lequel, ledit couvercle de gril est monté de manière articulée sur ledit couvercle avant (202).

3. Véhicule à deux roues selon la revendication 1, dans lequel ladite unité de puissance (202) est disposée dans un support d'unité de puissance (301) ;
dans lequel ledit support d'unité motrice (301) est configuré avec une ou plusieurs rainures (311) ;
dans laquelle lesdites rainures (311) sont configurées pour recevoir des moyens de roulement (302) ;
lesdits moyens de roulement (302) étant des rouleaux de type aiguille.

4. Véhicule à deux roues selon la revendication 3, dans lequel ledit support d'unité motrice (301) est disposé à l'intérieur d'une cavité (304).

5. Véhicule à deux roues selon la revendication 1, dans lequel ledit support d'unité de puissance (301) est monté sur une structure de suspension de montage arrière (303) et soutenu par un support angulaire (305) ;
dans lequel ledit support angulaire (305) est monté pivotant sur une structure de cadre et ledit support angulaire est disposé au-dessus d'un bras oscillant (306).

6. Véhicule à deux roues selon la revendication 1, dans lequel l'unité motrice (201) est configurée avec un moyen de verrouillage (404) (201) pour s'accoupler avec l'appareil de verrouillage de l'unité motrice (400) ;
dans lequel ledit moyen de verrouillage (404) est une unité détachable ou une unité intégrée, et ledit moyen de verrouillage (404) est une structure creuse.

7. Véhicule à deux roues selon la revendication 1, dans lequel le dispositif de verrouillage de l'unité motrice (400) comprend une partie de tête (401), un coupleur mâle primaire (403) et un coupleur mâle secondaire (407) ;
dans lequel, ledit coupleur mâle primaire (403) est reçu dans ledit moyen de verrouillage (404) et ledit coupleur mâle secondaire (407) est couplé à un coupleur femelle (406) fourni dans ladite unité de puissance (201).

8. Véhicule à deux roues selon la revendication 1, dans lequel l'appareil de verrouillage de l'unité de puissance (400) est configuré pour fonctionner comme un coupleur de puissance ;
dans lequel ledit appareil de verrouillage de l'unité de puissance (400) est l'un des connecteurs électriques dockables et des connecteurs électriques manuels.

9. Véhicule à deux roues selon la revendication 1, dans lequel ladite unité de puissance (201) est configurée avec un couvercle de grille intégré (207).

10. Méthode d'engagement d'une unité de puissance (201) dans un véhicule à deux roues (100), ladite méthode comprenant les étapes suivantes :
déverrouiller un ensemble de sièges (150) dudit véhicule (100) par des moyens d'accès autorisés ;
placer un dispositif de verrouillage de l'unité de puissance (400) dans un moyen d'accès (204a) d'un boîtier utilitaire (201) ; et
coupler ledit appareil de verrouillage d'unité de puissance (400) avec un moyen de verrouillage (404) fourni sur une unité de puissance (201), dans lequel une surface inférieure (204b) de ladite boîte utilitaire (201) forme ledit moyen d'accès (204a) pour insérer ledit appareil de verrouillage d'unité de puissance (400).

11. Méthode de désengagement d'une unité motrice (201) dans un véhicule à deux roues (100) comprenant les étapes suivantes :
déverrouiller un siège (150) dudit véhicule à deux roues (100) par un moyen d'accès autorisé ;
désengager un dispositif de verrouillage de l'unité de puissance (400) inséré dans un moyen d'accès (204a) formé dans une surface inférieure (204b) d'un coffre utilitaire ; et
faire glisser l'unité de puissance (201) hors d'une unité de support (301).
